# EUROPÄISCHE PATENTANMELDUNG

(11) **EP 2 526 761 A2**
(43) Veröffentlichungstag der Anmeldung: **28.11.2012**
(21) Anmeldenummer: 12167887.4
(22) Anmeldetag: 14.05.2012
(51) Int. Cl.: A01G 23/00

(54) **Forstfahrzeug mit einem Kran**

(30) Priorität: 27.05.2011 DE 202011050272 U
(71) Anmelder: Pfanzelt Maschinenbau GmbH, 87675 Rettenbach a. A. (DE)
(72) Erfinder: Pfanzelt, Paul, 87675 Rettenbach a. A. (DE)
(74) Vertreter: Tetzner, Michael

(57) **Zusammenfassung**

Das erfindungsgemäße Forstfahrzeug weist einen darauf gehalterten Kran (1) auf, der einen schwenkbaren Kranarm (2) mit einem Gerät zur Manipulation und/oder Bearbeitung von Rund- und/oder Energiehölzern vorsieht. Der Kran weist außerdem ein Ballastgewicht (5, 5') zur Erzeugung eines Gegenmoments zum Kranarm und einen mit dem Ballastgewicht zusammenwirkenden Verlagerungsmechanismus (6, 6') auf, um das Ballastgewicht in Abhängigkeit der Belastung des Kranarms zu verlagern. Durch den Verlagerungsmechanismus wird das Gegenmoment nicht nur durch das Ballastgewicht, sondern auch durch dessen Verlagerung bestimmt, sodass die Gesamtgewichtserhöhung entsprechend reduziert werden kann.

## Beschreibung

Die Erfindung betrifft ein Forstfahrzeug mit einem daraufgehalterten Kran, der einen schwenkbaren Kranarm mit einem Gerät zur Manipulation und/oder Bearbeitung von Rund- und/oder Energiehölzern aufweist.

Um den immer größer werdenden Ansprüchen an die Wirtschaftlichkeit der Holzernte gerecht zu werden, werden Forstfahrzeuge immer leistungsfähiger. Dies zeichnet sich auch bei den aufgebauten Kranen zur Manipulation und/oder Bearbeitung von Rund- und/oder Energiehölzern in Form von immer größeren Reichweiten und Hubkräften ab.

Damit die immer größer werdenden Hubmomente genutzt werden können, muss das Forstfahrzeug ein entsprechendes Standmoment aufbringen, damit die Anforderungen an die Standsicherheit des Fahrzeuges jederzeit gewährleistet sind. Da die Stützbreite der Forstfahrzeug im Allgemeinen durch die Befahrbarkeit der Rückegassen und durch gesetzliche Anforderungen im Sinne der StVZO vorgegeben sind, wird das Standmoment zum derzeitigen Stand der Technik hauptsächlich durch höhere Maschinengewichte oder Fahrzeugabstützungen realisiert.

Für eine nachhaltige und wirtschaftliche Forstwirtschaft ist eine bodenschonende Bearbeitung für ein schnelles und regeneratives Wachstum der Bäume von entscheidender Bedeutung. Höhere Fahrzeuggewichte verursachen jedoch eine größere Bodenverdichtung, die einem schnellen Wachstum der Bäume entgegensteht.

Der Erfindung liegt daher die Aufgabe zugrunde, ein Forstfahrzeug zu schaffen, mit dem eine möglichst bodenschonende Bearbeitung mit großer Reichweite und/oder großen Hubkräften des Krans ermöglicht wird.

Erfindungsgemäß wird diese Aufgabe durch die Merkmale des Anspruches 1 gelöst.

Das erfindungsgemäße Forstfahrzeug weist einen daraufgehalterten Kran auf, der einen schwenkbaren Kranarm mit einem Gerät zur Manipulation und/oder Bearbeitung von Rund- und/oder Energiehölzern vorsieht. Der Kran weist außerdem ein Ballastgewicht zur Erzeugung eines Gegenmoments zum Kranarm und einen mit dem Ballastgewicht zusammenwirkenden Verlagerungsmechanismus auf, um das Ballastgewicht in Abhängigkeit der Belastung des Kranarms zu verlagern.

Durch den Verlagerungsmechanismus wird das Gegenmoment nicht nur durch das Ballastgewicht, sondern auch durch dessen Verlagerung bestimmt, sodass die Gesamtgewichtserhöhung entsprechend reduziert werden kann.

Weitere Ausgestaltungen der Erfindung sind Gegenstand der Unteransprüche.

Für den Kran sind grundsätzlich verschiedene Ausführungsformen denkbar. Üblicherweise wird er jedoch eine drehbare Kransäule umfassen, die mit einem Ende drehbar am Forstfahrzeug befestigt ist und an ihrem anderen Ende den Kranarm schwenkbar haltert. Der Kranarm kann insbesondere höhen- und längsverstellbar und/oder teleskopierbar ausgebildet sein.

Der Kran kann weiterhin als Manipulier- oder Positionierkran ausgebildet sein, wobei Lade- und Rückekrane meist den Manipulierkranen zugeordnet und für das schnelle und präzise und sichere Handling von Stammholz eingesetzt werden. Parallelkrane zählen zu den Positionierkranen, da mit dieser Krangattung das angebrachte Bearbeitungsgerät, meist ein Harvesteraggregat, direkt an den noch stehenden Stamm positioniert wird.

Als Verlagerungsmechanismus kommt insbesondere ein Schwenkmechanismus zum Verschwenken des Ballastgewichtes oder ein Verschiebemechanismus zum Verschieben des Ballastgewichtes in Betracht. Der Verlagerungsmechanismus sieht zweckmäßigerweise wenigstens einen Hydraulik- oder Elektroantrieb zum Verlagern des Ballastgewichtes vor.

Gemäß einer bevorzugten Ausgestaltung der Erfindung ist weiterhin eine Regel- und Steuereinrichtung vorgesehen, die mit wenigstens einem, die Belastung des Kranarms aufnehmenden Sensor und mit dem Verlagerungsmechanismus in Verbindung steht. Auf diese Weise kann die Verlagerung des Ballastgewichtes im laufenden Betrieb an die jeweilige Belastungssituation des Kranarmes angepasst werden, wobei die Belastung des Kranarms beispielsweise über wenigstens einen Druck- und/oder einen Wegsensor ermittelt werden kann.

Weitere Vorteile und Ausgestaltungen der Erfindung werden im Folgenden anhand der Beschreibung und der Zeichnung näher erläutert.

In der Zeichnung zeigen
- Fig. 1: eine dreidimensionale Darstellung eines Forstfahrzeugs mit einem Verschiebemechanismus für das Ballastgewicht in einer ersten Arbeitsstellung,
- Fig. 2: eine dreidimensionale Darstellung eines Forstfahrzeugs mit einem Verschiebemechanismus für das Ballastgewicht in einer zweiten Arbeitsstellung,
- Fig. 3: eine Schnittdarstellung im Bereich des Verschiebemechanismus,
- Fig. 4: eine dreidimensionale Darstellung eines Forstfahrzeugs mit einem Schwenkmechanismus für das Ballastgewicht in einer ersten Arbeitsstellung,
- Fig. 5: eine dreidimensionale Darstellung eines Forstfahrzeugs mit einem Schwenkmechanismus für das Ballastgewicht in einer zweiten Arbeitsstellung und
- Fig. 6: eine Seitenansicht im Bereich des Schwenkmechanismus.

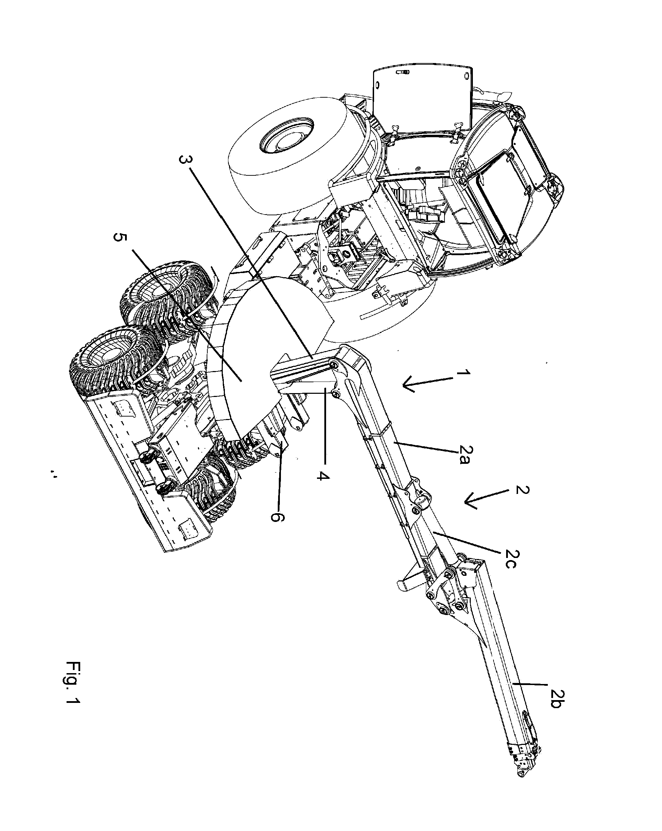

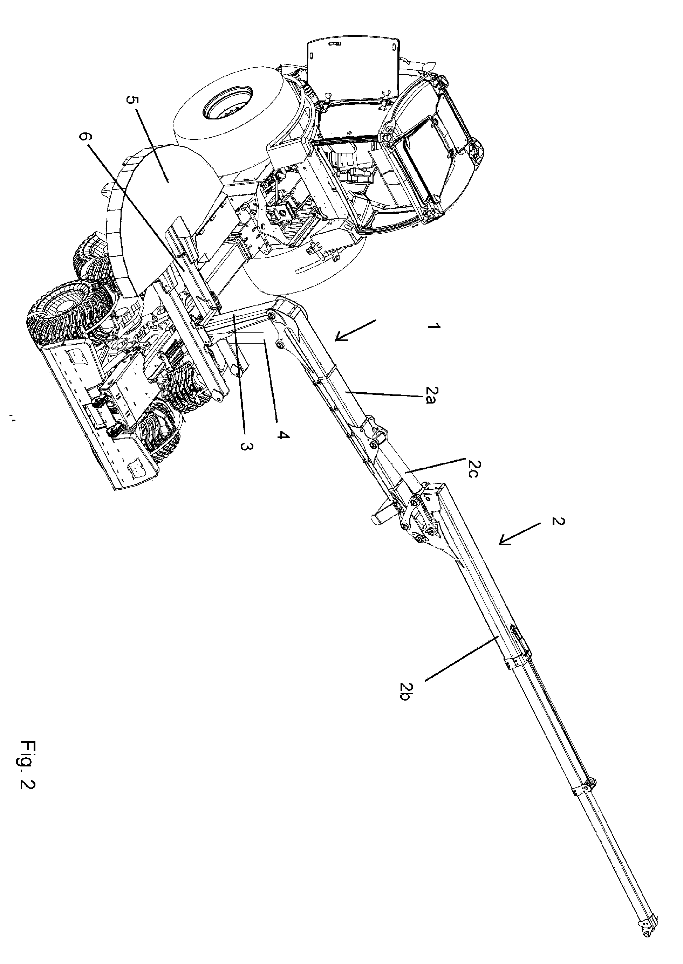

Das in Fig. 1 und Fig. 2 dargestellte Forstfahrzeug ist mit einem Kran 1 ausgestattet, der einen schwenkbaren Kranarm 2 mit einem nicht näher dargestellten Gerät zur Manipulation und/oder Bearbeitung von Rund- und/oder Energiehölzern aufweist. Ein solches Gerät kann beispielsweise durch einen Greifer, ein Harvesteraggregat oder ein Energieholzaggregat gebildet werden und wird am Ende des Kranarms 2 angekoppelt.

Der Kranarm 2 setzt sich in diesem Ausführungsbeispiels aus einem Hauptarm 2a und einem Knickarm 2b zusammen, wobei der Knickarm teleskopierbar ausgebildet ist. Zwischen Hauptarm und Knickarm ist ein Knickarmzylinder 2c mit Kraftumlenkhebel vorgesehen. Der Kran 1 umfasst ferner eine Kransäule 3, die mit einem Ende drehbar am Forstfahrzeug befestigt ist und an ihrem anderen Ende den Kranarm 2 schwenkbar haltert. Die Schwenkbewegung des Kranarms 2 relativ zur Kransäule 3 wird über einen Hydraulikzylinder 4 bewirkt. Über den teleskopierbaren Knickarm 2b, den Knickarmzylinder 2c und den Hydraulikzylinder 4 lässt sich der Kranarm in der Höhe und seiner Reichweite an die jeweiligen Erfordernisse anpassen.

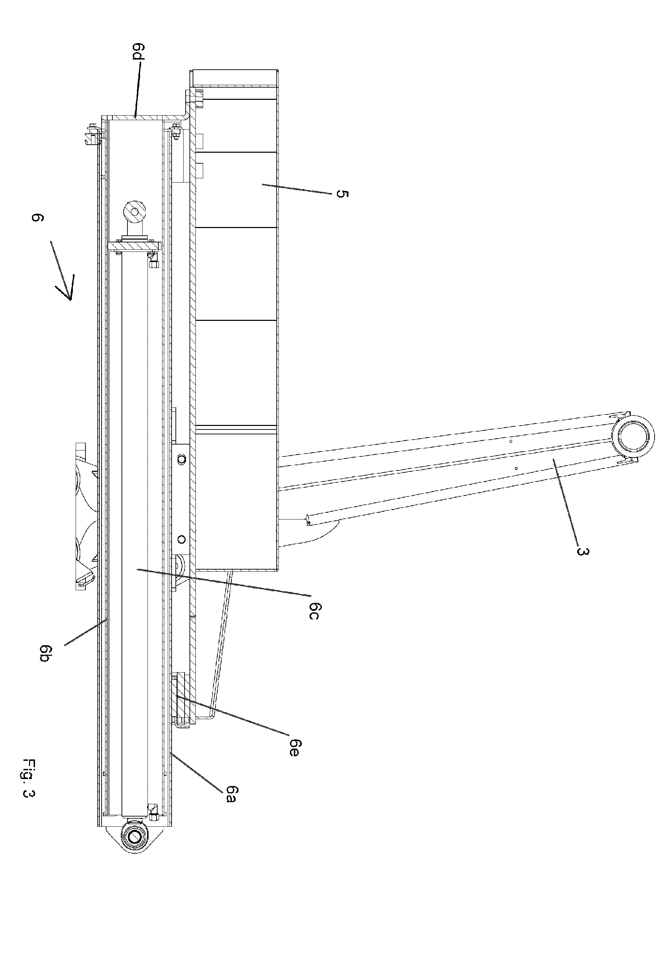

Um eine ausreichende Standsicherheit des Forstfahrzeuges auch bei ausgefahrenem und/oder stark belasteten Kranarm 2 zu gewährleisten, ist ferner ein Ballastgewicht 5 vorgesehen, dass über einen Verlagerungsmechanismus 6 in Abhängigkeit der Belastung des Kranarms 2 verlagert werden kann. Das Ballastgewicht 5 ist hierzu auf der vom Kranarm entgegengesetzte Seite der Kransäule angeordnet und kann dort zwischen den in den Fig. 1 und 2 gezeigten Stellungen verschoben werden, um das jeweils erforderliche Gegenmoment zum Kranarm 2 bereitzustellen. Im dargstellten Ausführungsbeispiel wird der Verlagerungsmechanismus 6 durch einen in Fig. 3 näher gezeigten Schiebemechanismus gebildet, der zwei parallel zueinander angeordnete Teleskopausschübe mit jeweils einem äußeren Teleskoprohr 6a und einem inneren Teleskoprohr 6b umfasst, wobei für deren Betätigung ein Betätigungszylinder 6c vorgesehen ist. Das Ballastgewicht 5 ist dabei über Flansche 6d mit den inneren Teleskoprohren 6b verbunden und stützt sich außerdem über Gleitschuhe 6e auf den beiden äußeren Teleskoprohren 6a ab. Durch eine Betätigung des Betätigungszylinders 6c kann das Ballastgewicht 5 zwischen den in Fig. 1 und Fig. 2 gezeigten Stellungen verschoben werden, wobei selbstverständlich auch Zwischenstellungen denkbar sind.

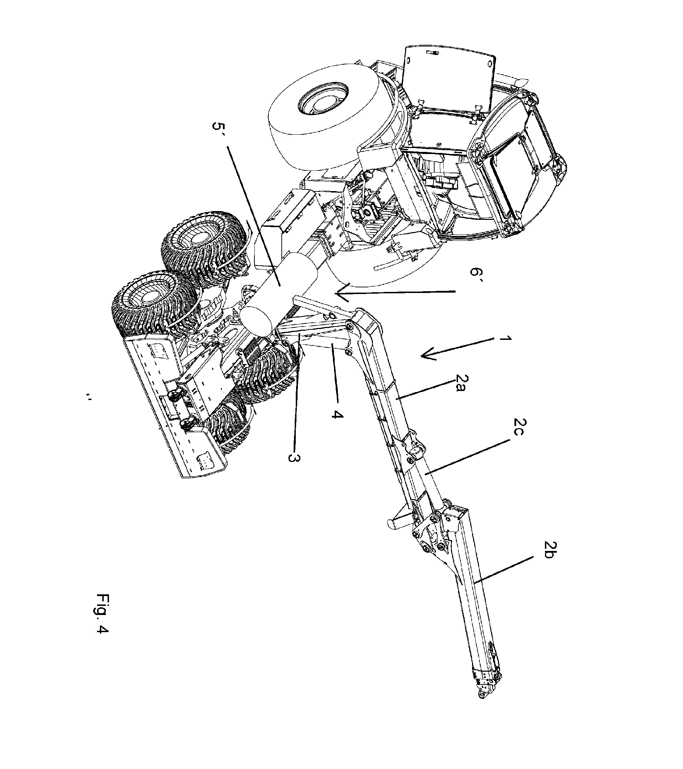

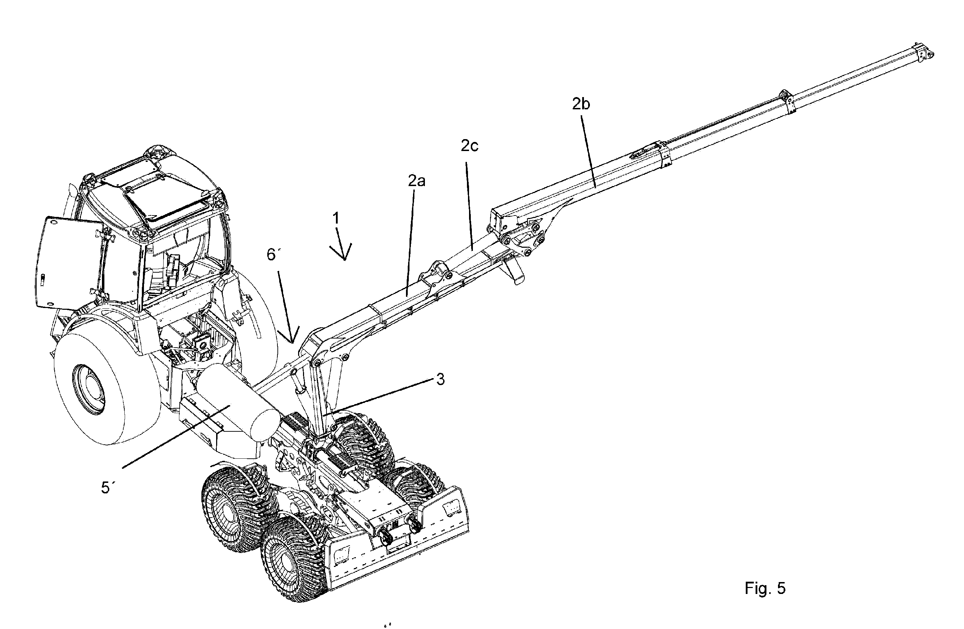

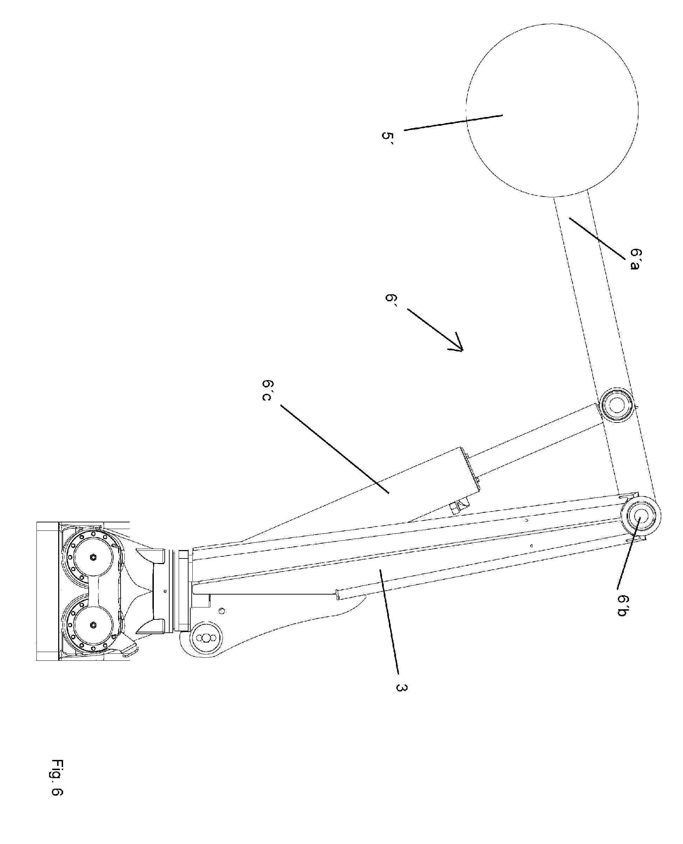

Das Ausführungsbeispiel gemäß den Fig. 4 bis Fig. 6 unterscheidet sich von dem ersten Ausführungsbeispiel lediglich in der Ausgestaltung des Verlagerungsmechanismus 6' und dem Ballastgewicht 5'. Der Verlagerungsmechanismus 6' wird hier durch einen Schwenkmechanismus gebildet, wobei das Ballastgewicht 5'über einen Schwenkarm 6'a gelenkig um eine Schwenkachse 6'b an der Kransäule 3 gehaltert ist. Über einen Betätigungszylinder 6'c kann das Ballastgewicht 5' um die Schwenkachse 6'b verschwenkt werden, wobei über eine Änderung des Abstands zwischen Ballastgewicht 5' und Kransäule 3 das Gegenmoment für den belasteten Kranarm 2 eingestellt werden kann.

Wenngleich die Verlagerung der Ballastgewichte 5, 5' manuell vom Führerhaus bewirkt werden kann, ist eine Regel- und Steuereinrichtung vorgesehen, die mit wenigstens einem, die Belastung des Kranarms aufnehmenden Sensor und mit dem Verlagerungsmechanismus 6, 6' in Verbindung steht, um so eine automatische Verlagerung des Ballastgewichts 5, 5' zu bewirken. Auf diese Weise wird in Abhängigkeit der momentanen Belastung des Kranarmes ein ausreichendes Gegenmoment über das Ballastgewicht 5, 5" bereitgestellt, um so die Standsicherheit des Forstfahrzeuges zu gewährleisten. Die Regel- und Steuereinrichtung ist in den Zeichnungen nicht näher dargestellt. Bei den ebenfalls nicht näher dargestellten Sensoren handelt es sich beispielsweise um einen unmittelbar am Hydraulikzylinder 4 angebrachten Drucksensor. Weiterhin können auch Wegsensoren vorgesehen sein, welche die momentane Ausladung des Kranarms 2 erfassen. Aus den Sensorwerten wird dann in der Steuer- und Regeleinrichtung das erforderliche Gegenmoment ermittelt und über den Verlagerungsmechanismus 6, 6' eingestellt. Über zusätzliche Weg- bzw. Lagersensoren kann dabei auch der Verfahr- bzw. Schwenkweg des Ballastgewichtes 5, 5' erfasst werden, um auf diese Weise die genaue Lage des Ballastgewichtes in Bezug auf die Kransäule 3 zu erfassen.

Durch die Verlagerung des Ballastgewichtes 5, 5' kann das für die Erzeugung des Gegenmoments erforderliche Gewicht deutlich reduziert werden, sodass die Belastung auf den Boden durch das Forstfahrzeug entsprechend verringert wird. So ist auch bei großen Hubkräften und/oder Ausladungen eine relativ bodenschonende Bearbeitung möglich.

## Patentansprüche

1. Forstfahrzeug mit einem darauf gehalterten Kran (1), der einen schwenkbaren Kranarm (2) mit einem Gerät zur Manipulation und/oder Bearbeitung von Rund-und/oder Energiehölzern aufweist,
**dadurch gekennzeichnet, dass** der Kran (2) ein Ballastgewicht (5, 5') zur Erzeugung eines Gegenmoments zum Kranarm und einen mit dem Ballastgewicht (5, 5') zusammenwirkenden Verlagerungsmechanismus (6, 6') aufweist, um das Ballastgewicht in Abhängigkeit der Belastung des Kranarms (2) zu verlagern.

2. Forstfahrzeug nach Anspruch 1, **dadurch gekennzeichnet, dass** der Kran (1) eine drehbare Kransäule (3) umfasst, die mit einem Ende drehbar am Forstfahrzeug befestigt ist und an ihrem anderen Ende den Kranarm (2) schwenkbar haltert.

3. Forstfahrzeug nach Anspruch 2, **dadurch gekennzeichnet, dass** sich der Kranarm (2) auf einer Seite der Kransäule (3) von dieser wegerstreckt, während das Ballastgewicht (5, 5') auf der gegenüberliegenden Seite der Kransäule (3) angeordnet ist.

4. Forstfahrzeug nach einem oder mehreren der vorhergehenden Ansprüche, **dadurch gekennzeichnet, dass** der Kranarm (2) höhen- und längenverstellbar ausgebildet ist.

5. Forstfahrzeug nach einem oder mehreren der vorhergehenden Ansprüche, **dadurch gekennzeichnet, dass** der Kranarm (2) parallelgeführt ist.

6. Forstfahrzeug nach einem oder mehreren der vorhergehenden Ansprüche, **dadurch gekennzeichnet, dass** der Verlagerungsmechanismus (6') einen Schwenkmechanismus zum Verschenken des Ballastgewichts (5) umfasst.

7. Forstfahrzeug nach einem oder mehreren der vorhergehenden Ansprüche, **dadurch gekennzeichnet, dass** der Verlagerungsmechanismus (6) einen Verschiebemechanismus zum Verschieben des Ballastgewichts (5) umfasst.

8. Forstfahrzeug nach einem oder mehreren der vorhergehenden Ansprüche, **dadurch gekennzeichnet, dass** der Verlagerungsmechanismus (6, 6') wenigstens eine hydraulische und/oder elektrische Verstelleinrichtung zum Verlagern des Ballastgewichts (5, 5') umfasst.

9. Forstfahrzeug nach einem oder mehreren der vorhergehenden Ansprüche, **dadurch gekennzeichnet, dass** weiterhin eine Regel- und Steuereinrichtung vorgesehen ist, die mit wenigstens einem, die Belastung des Kranarms (2) aufnehmenden Sensor und mit dem Verlagerungsmechanismus (6, 6') in Verbindung steht.

10. Forstfahrzeug nach Anspruch 8, **dadurch gekennzeichnet, dass** der wenigstens eine, die Belastung des Kranarms (2) aufnehmende Sensor durch einen Druck-und/oder einen Wegsensor gebildet wird.

11. Forstfahrzeug nach einem oder mehreren der vorhergehenden Ansprüche, **dadurch gekennzeichnet, dass** zwischen Kransäule (3) und dem schwenkbar angelenkten Kranarm (2) ein Hydraulikzylinder (4) zur Verstellung des Kranarms (2) vorgesehen ist.

12. Forstfahrzeug nach einem oder mehreren der vorhergehenden Ansprüche, **dadurch gekennzeichnet, dass** der Kranarm (2) aus wenigstens zwei gelenkig miteinander verbundenen Teilen besteht.

13. Forstfahrzeug nach einem oder mehreren der vorhergehenden Ansprüche, **dadurch gekennzeichnet, dass** der Kranarm (2) teleskopierbar ausgebildet ist.
